# FASCICULE DE BREVET EUROPEEN

(11) **EP 1 521 519 B1**
(45) Date de publication et mention de la délivrance du brevet: **08.04.2009**
(21) Numéro de dépôt: 03763955.6
(22) Date de dépôt: 10.07.2003
(51) Int. Cl.: A01G 17/02, A01G 3/04

(54) **EFFEUILLEUSE, PLUS SPECIALEMENT DESTINEE A L'EFFEUILLAGE SELECTIF DE LA VIGNE**
BLATTSCHLÄGER, INSBESONDERE ZUM GEZIELTEN ENTBLÄTTERN VON REBENBLÄTTERN
LEAF STRIPPER, MORE PARTICULARLY DESIGNED FOR SELECTIVE VINE LEAF STRIPPING

(30) Priorité: 12.07.2002 FR 0208817
(43) Date de publication de la demande: 13.04.2005
(73) Titulaire: PELLENC (Société Anonyme), 84120 Pertuis (FR)
(72) Inventeur: PELLENC, Roger, F-84120 Pertuis (FR)
(74) Mandataire: Marek, Pierre
(86) Numéro de dépôt international: PCT/FR2003/002176
(87) Numéro de publication internationale: WO 2004/006653

(56) Documents cités:
- EP-A- 0 597 253
- WO-A-01/87047
- FR-A- 2 417 932

## Description

L'invention concerne une effeuilleuse, plus particulièrement destinée à réaliser l'effeuillage sélectif de la vigne.

L'effeuillage est une technique qui consiste à éliminer une quantité plus ou moins importante de feuilles situées dans la zone fructifère des plants. Pratiquée manuellement depuis longtemps dans certains vignobles, cette opération qui vise à améliorer la qualité de la récolte et à faciliter les travaux manuels d'éclaircissage et de cueillette connaît un intérêt croissant avec le développement de l'effeuillage mécanique.

Les intérêts de l'effeuillage sont multiples :
- Favoriser l'aération des grappes de raisin pour diminuer la pourriture.
- Favoriser l'éclaircissement pour améliorer la coloration (pellicule du raisin plus épaisse).
- Eclaircir le matelas végétal dans la zone fructifère, pour une meilleure pénétration et localisation des traitements (botrytis ; oidium ; pourriture grise ; ver de la grappe ; mildiou,...).
- Améliorer la maturation des grappes par une meilleure exposition au soleil (grappes plus lourdes, arômes plus développés et meilleur état sanitaire de la vendange).
- Favoriser l'accès aux grappes pour réduire les temps de main d'oeuvre sur des opérations manuelles telles que l'éclaircissage (- 50 %), la vendange manuelle (- 30 % à - 40 %).
- Réduire le feuillage pour limiter les pertes de jus dues à l'aspiration des feuilles du reste de la vendange en récolte mécanique.
- Faciliter le séchage en cas de pluie par une meilleure exposition au soleil et une meilleure aération.

L'effeuillage s'avère donc une opération très intéressante, qui correspond bien au souci d'optimisation des tâches et de recherche de qualité de récolte.

Plusieurs machines et procédés ont été proposés à ce jour et certains d'entre eux sont actuellement encore utilisés pour l'accomplissement de ce travail.

Selon une technique d'effeuillage développée par la Demanderesse, on utilise, pour l'accomplissement de cette tâche, une machine comprenant un tambour rotatif à claire-voie, un moyen d'aspiration permettant de générer un flux d'air aspirant traversant la paroi latérale cylindrique ajourée dudit tambour, un moyen pour diriger ce flux d'air à travers une portion changeante de ladite paroi latérale, de sorte à happer et plaquer les feuilles contre la paroi latérale à claire-voie du tambour rotatif, et un système d'effeuillage permettant de détacher les feuilles plaquées contre ladite paroi.

Par exemple, dans le document FR-2.417.932 A, est décrit un dispositif d'effeuillage utilisant une cage cylindrique rotative à claire-voie destinée à rouler sur le matelas végétal et à l'intérieur de laquelle est logé fixement un cylindre creux muni d'une ouverture. Un aspirateur monté au-dessus du cylindre intérieur creux permet de créer, à l'intérieur de ce dernier, une dépression ayant pour effet d'aspirer les feuilles de la végétation et de les plaquer contre la cage rotative à claire-voie, face à l'ouverture du cylindre fixe. Des galets montés sur des supports articulés sont appliqués sous pression contre la surface latérale de la cage et sont entraînés en rotation par cette dernière. Les feuilles viennent se coincer entre le tambour tournant à claire-voie et les galets, et sont arrachées des rameaux sous la force de traction résultant du déplacement de la machine.

A priori, le principe de l'écartement du feuillage au moyen du flux aspirant d'une turbine à travers un tambour rotatif à claire-voie permettant de tirer et de plaquer les feuilles sur la surface latérale dudit tambour semble astucieux et économique en puissance. Il ne semble pas cependant que la machine décrite dans le document FR-2.417.932 ait été mise sur le marché, et, à la connaissance de la Demanderesse, aucune effeuilleuse utilisant ce principe n'est aujourd'hui commercialisée.

L'insuccès de cette machine découle certainement du fait que le principe d'arrachement des feuilles au moyen de galets à friction ne semble pas pouvoir être appliqué concrètement pour plusieurs raisons :
- suivant le descriptif et les dessins du document FR-2.417.932, les supports articulés et montés sur ressorts portant les galets sont appelés à être disposés, en cours de travail, dans le matelas végétal ; cette disposition est inapplicable du fait que ces supports frottent dans le matelas végétal et contrarient l'aspiration des feuilles, car ils repoussent la végétation ; il n'est pas possible de disposer des organes mécanique dans le matelas végétal au delà de la paroi de la cage rotative, car ceux-ci se télescoperaient et seraient arrachés par divers obstacles situés dans l'axe du rang de vigne tels que tuteurs, tendeurs de fils et, surtout, piquets ;
- du fait que l'effort relativement important nécessaire pour supprimer les feuilles par arrachement, il est peu probable que l'effort généré par la friction des galets sur le tambour suffise, surtout si des feuilles ou des sarments s'interposent entre la paroi de la cage et les galets ;
- ce dispositif, de par son emplacement par rapport au matelas végétal, et de par son principe de sectionnement des feuilles par arrachement, ne peut qu'occasionner un bourrage du système par accumulation de végétaux et abîmer la vigne.

Selon le document FR-2.808.964 A, la Demanderesse a proposé une effeuilleuse plus spécialement destinée à l'effeuillage de la vigne, comprenant au moins une tête d'effeuillage, comportant un tambour rotatif à claire-voie, un moyen d'aspiration permettant de générer un flux d'air aspirant traversant la paroi latérale cylindrique ajourée dudit tambour, un moyen pour canaliser ce flux d'air à travers une portion changeante de ladite paroi latérale, et un moyen de coupe installé à proximité de ladite portion de paroi latérale du tambour aspirant tournant et orienté parallèlement ou sensiblement parallèlement à l'axe de rotation de ce dernier, ce moyen de coupe étant disposé en arrière d'un plan diamétral dudit tambour tournant orienté perpendiculairement au sens d'avancement de la machine en cours de travail.

Cette machine représente une première étape de progrès dans la mesure où elle permet de réaliser un effeuillage de qualité assimilable à un rognage du matelas végétal, compte tenu du fait que les feuilles sont coupées et non déchiquetées, contrairement aux solutions précédemment proposées qui enlèvent les feuilles par arrachement au moyen d'hélices ou de couteaux, ou de galets de coincement.

Après sectionnement, les feuilles restent plaquées contre la paroi latérale ajourée du tambour tournant et sont entraînées hors du champ d'aspiration par la rotation de ladite paroi. Lorsque la portion de paroi latérale tapissée de feuilles coupées se trouve isolée du champ d'aspiration par le déflecteur de canalisation du flux d'aspiration, les feuilles n'étant plus soumises à l'attraction du flux d'air, chutent par gravité. Ce résultat constitue un autre avantage, car il supprime les projections de feuilles déchiquetées susceptibles d'occasionner des risques de maladies du fait des particules et de la poussière propulsées par le souffle de la turbine sur les rangs de vigne voisins.

On a cependant constaté que la quantité de feuilles enlevées restait insuffisante pour obtenir l'ensemble des résultats recherchés, la dépression générée par le moyen d'aspiration n'exerçant pas toujours une action de traction suffisamment forte pour entraîner les feuilles qui sont seulement plaquées contre le tambour tournant, en direction du moyen de coupe.

Le document WO 01/87047 A décrit une évolution de l'effeuilleuse représentée dans le document FR-2.808.964 A.

Selon ce document, la tête d'effeuillage ou chaque tête d'effeuillage de l'effeuilleuse comprend une chenille de guidage constituée par un tapis sans fin à claire-voie s'enroulant, d'une part, sur le tambour aspirant tournant et, d'autre part, sur un deuxième tambour disposé en avant dudit tambour aspirant, ledit tapis sans fin ajouré ayant sur le côté de la tête d'effeuillage appelé à se trouver face au matelas végétal, constitué par le rang de vigne, en cours de travail, une trajectoire ou portion rectiligne, parallèle à l'axe d'avancement de l'effeuilleuse, de sorte à présenter une surface d'appui plane.

La chenille ajourée ainsi réalisée a pour fonction d'assurer un bon guidage et la stabilité de la tête d'effeuillage sur le matelas végétal. Elle assure un appui souple de la tête d'effeuillage sur le matelas végétal, en évitant l'écrasement de ce dernier en raison de sa grande surface de contact.

D'autre part, le moyen de coupe de la machine décrite dans le document WO-01/87047 est constitué par une barre de coupe hélicoïdale comprenant, d'une part, une vis de coupe constituée par une tige cylindrique rotative munie d'un filet hélicoïdal présentant au moins un bord tranchant et, d'autre part, une contre-lame constituée par un fourreau cylindrique fixe, ouvert latéralement, et à l'intérieur duquel est logée ladite vis de coupe.

Il a été observé que la machine ainsi agencée déchiquette les feuilles et arrache une quantité non négligeable de jeunes sarments.

En résumé, bien que les deux versions de l'effeuilleuse décrites, respectivement, dans le document FR-2.808.964 A, et dans le document WO 01/87047 A, ont permis de simplifier la technicité d'utilisation des matériels, tout en améliorant la qualité de l'effeuillage, il a été constaté :
- que le réglage de l'intensité de l'effeuillage reste difficile et dépendant de la dextérité du conducteur de la machine ;
- que le pourcentage de feuilles hachées ou lacérées n'est toujours pas négligeable ;
- que la quantité de blessures infligées aux grappes, surtout lorsque l'effeuillage est pratiqué tard dans la saison, reste un problème non résolu, pour les viticulteurs.

L'invention a notamment pour objectif de proposer des solutions aux problèmes susmentionnés.

Dans ce but, on a retenu une effeuilleuse du genre décrit dans le document FR-2.808.964 A, comprenant un tambour tournant comportant une paroi latérale cylindrique ajourée, des moyens d'entraînement en rotation de ce tambour, un moyen d'aspiration permettant de générer un flux d'air aspirant traversant la paroi latérale cylindrique ajourée dudit tambour, un moyen pour canaliser ce flux d'air à travers une portion changeante de ladite paroi latérale, et un moyen de coupe installé à proximité de ladite portion de paroi latérale du tambour aspirant tournant et orienté parallèlement ou sensiblement parallèlement à l'axe de rotation de ce dernier, ledit moyen de coupe étant disposé en arrière d'un plan diamétral du tambour tournant orienté perpendiculairement à l'axe d'avancement de la tête d'effeuillage de ladite effeuilleuse, en cours de travail.

Selon une première disposition caractéristique de l'invention, l'effeuilleuse comporte les caractéristiques de la revendication 1. La paroi ajourée souple et déformable est de préférence, avantageusement constituée de mailles ou d'anneaux métalliques entrelacés, du genre "cotte de mailles".

Cette paroi souple et déformable permet une meilleure adaptation à la forme du matelas végétal et aux obstacles présents dans ce dernier, évite l'écrasement des baies et autorise l'installation, à l'intérieur du tambour, de palpeurs et/ou capteurs superposés permettant de mesurer la pression exercée par ledit tambour à différentes hauteurs du matelas végétal, de sorte à commander les organes assurant le bon positionnement dudit tambour, par rapport à ce dernier. De la sorte, il est possible de régler très précisément la pénétration du tambour dans la végétation et d'assurer un suivi continu et parfait du matelas végétal.

Du fait de la finesse des mailles de la paroi latérale du tambour, l'air aspiré est filtré et aucun débris n'est envoyé dans la vigne, par l'aspirateur, au-dessus de la machine.

Selon une autre disposition caractéristique intéressante de l'invention, un moyen de tirage complémentaire des feuilles est disposé parallèlement à la barre de coupe et en retrait de cette dernière par rapport à la végétation, en cours de travail.

De manière avantageuse, ce moyen de tirage complémentaire peut être constitué par un "ameneur" tournant accouplé à un dispositif d'entraînement en rotation.

Ce moyen de tirage complémentaire a pour fonction avantageuse de tirer encore plus les feuilles et de les maintenir plaquées contre la surface latérale ajourée du tambour, afin qu'elles ne ressortent pas.

Grâce à cette disposition, les feuilles plaquées contre le tambour sont tirées dans le sens de la rotation du tambour et lors de ce mouvement, les pétioles des feuilles sont sectionnées par la barre de coupe. On évite ainsi la déchirure ou émiettage des feuilles et par conséquent la possibilité de propagation de certaines maladies (cryptogamiques ou autres) dues à la dispersion de débris de feuilles atteintes déchiquetées. Cette coupe nette des feuilles donne un effeuillage d'une qualité comparable à celle de l'effeuillage manuel.

Suivant une autre importante disposition caractéristique de l'invention, la tête d'effeuillage ou chaque tête d'effeuillage de l'effeuilleuse est suspendue à un châssis porteur agencé et équipé de moyens permettant d'écarter ou de rapprocher la ou lesdites têtes d'effeuillage de l'axe d'avancement de ladite effeuilleuse, la position de travail de la tête d'effeuillage ou de chacune desdites têtes d'effeuillage par rapport audit axe étant régulée par un système d'asservissement agissant en fonction des déformations supportées par la paroi latérale souple du tambour et résultant de l'appui de ce dernier sur la végétation, en cours de travail.

On obtient de la sorte un excellent suivi du profil du matelas végétal, tout en modulant l'effort de contact du tambour sur ledit matelas végétal, afin de ne pas écraser les grappes de raisin en raison d'une pression trop importante.

Les buts, caractéristiques et avantages ci-dessus, et d'autres encore, ressortiront mieux de la description qui suit et des dessins annexés dans lesquels :
La figure 1 est une vue en élévation d'un premier exemple de réalisation d'une effeuilleuse selon l'invention, représentée attelée à l'arrière d'un tracteur agricole classique.
La figure 2 est une vue en plan de cette effeuilleuse comprenant deux têtes d'effeuillage symétriques dont l'une est schématiquement représentée, l'effeuilleuse étant montrée en cours de travail sur un rang de vigne.
La figure 3 est une vue en élévation et de face de l'une des têtes ou modules d'effeuillage de l'effeuilleuse représentée sans son châssis porteur.
La figure 4 est une vue en plan de la figure 3.

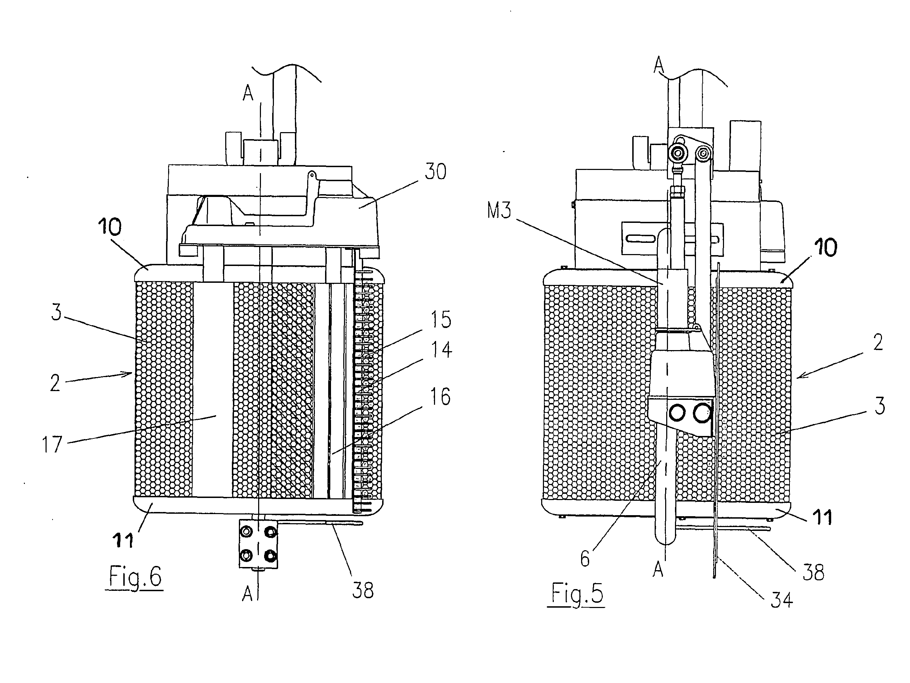

La figure 5 est une vue frontale de cette tête d'effeuillage.
La figure 6 est une vue arrière de cette dernière.

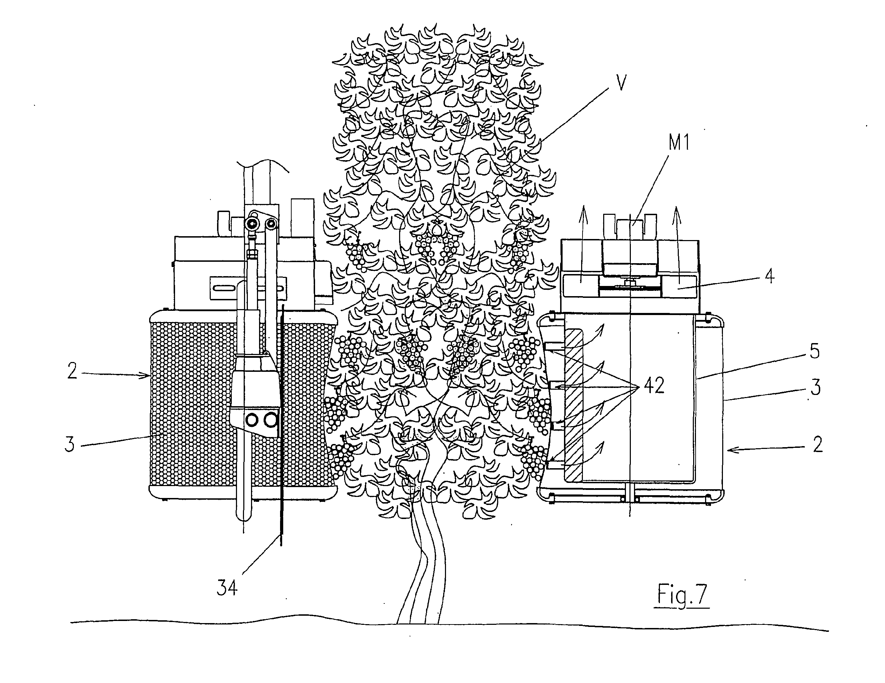

La figure 7 est une vue de face de l'effeuilleuse comportant deux têtes ou modules d'effeuillage disposées de part et d'autre d'un rang de vigne, l'un des modules étant représenté en coupe axiale.

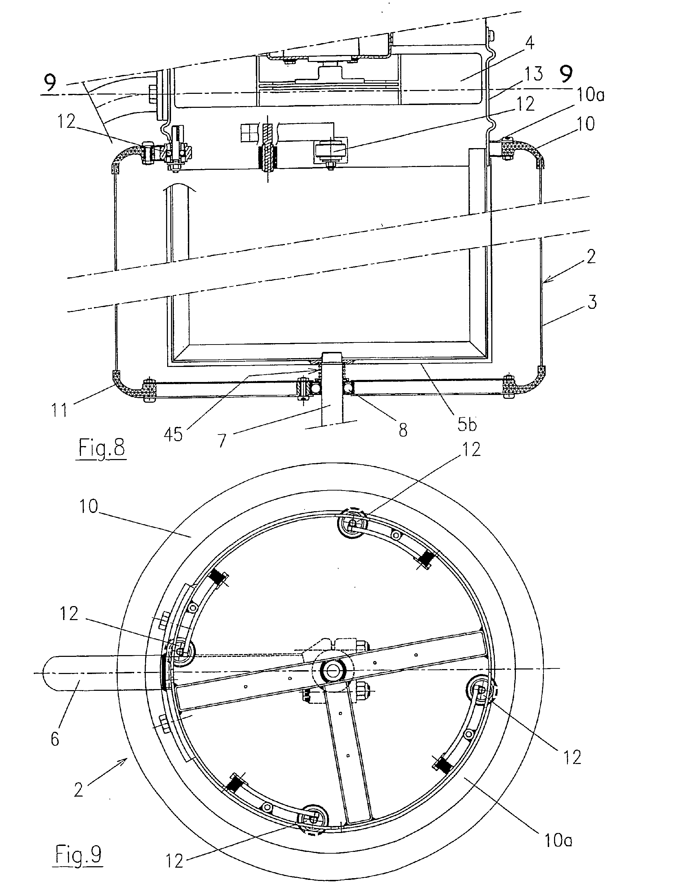

La figure 8 est une vue en coupe axiale d'un tambour d'effeuillage.
La figure 9 est une vue en coupe selon la ligne 9-9 de la figure 8.
La figure 10 est une vue en coupe transversale d'un module d'effeuillage.

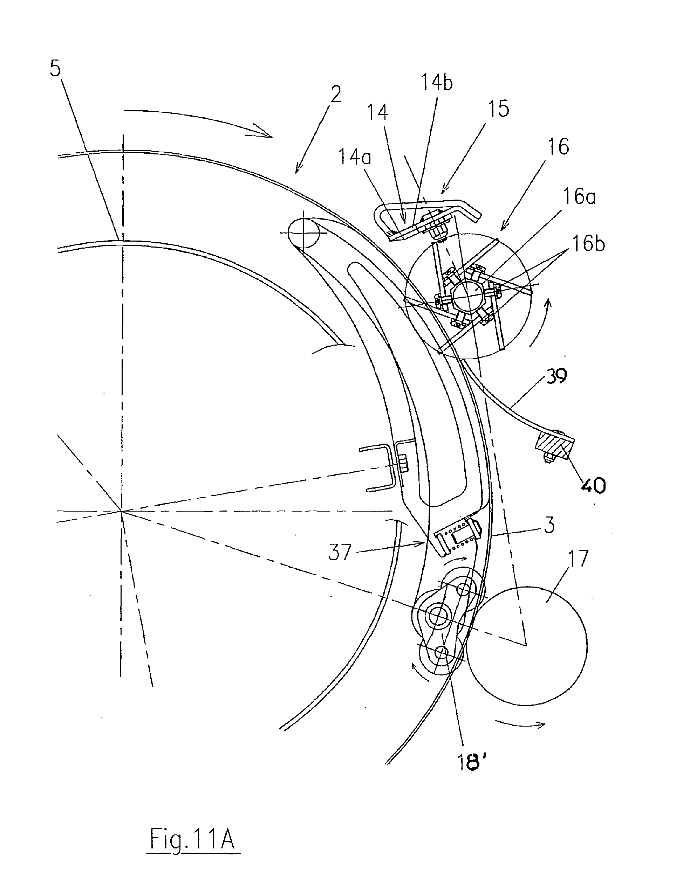

La figure 11A est une vue de détail, en plan, montrant le positionnement de l'ensemble de coupe et le dispositif d'entraînement en rotation du tambour.

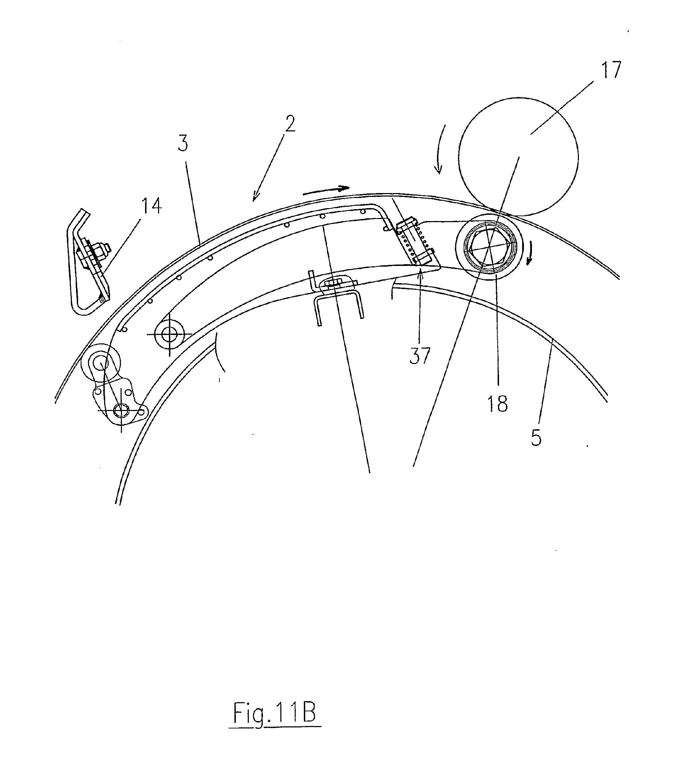

La figure 11B est une vue de détail, et en plan, illustrant un autre mode de réalisation du dispositif d'entraînement en rotation du tambour.

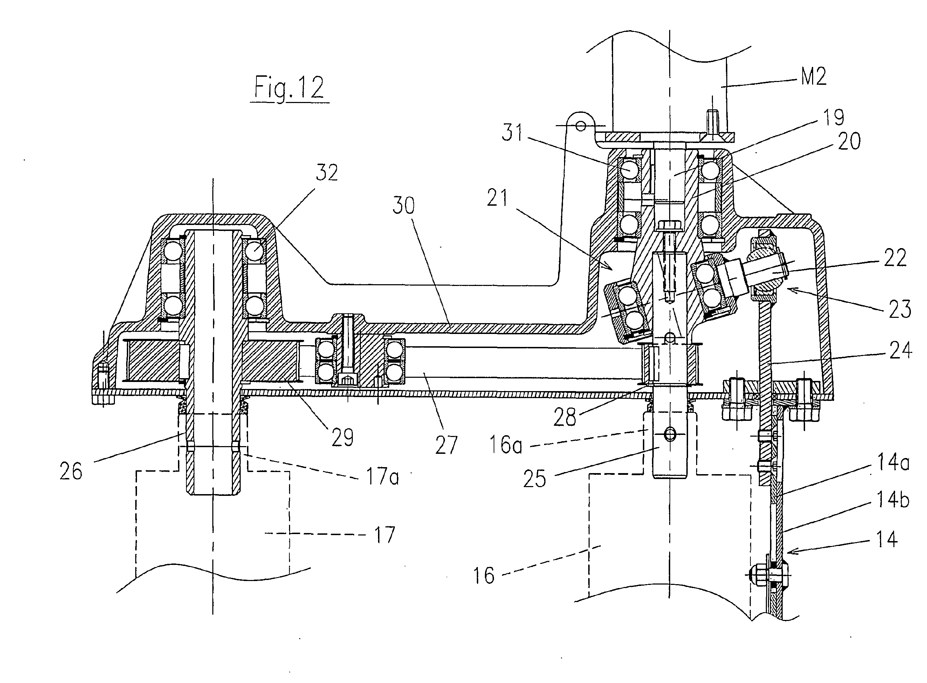

La figure 12 est une vue en coupe longitudinale des moyens de motorisation assurant l'entraînement du tambour tournant, de la barre de coupe et de l'ameneur tournant.

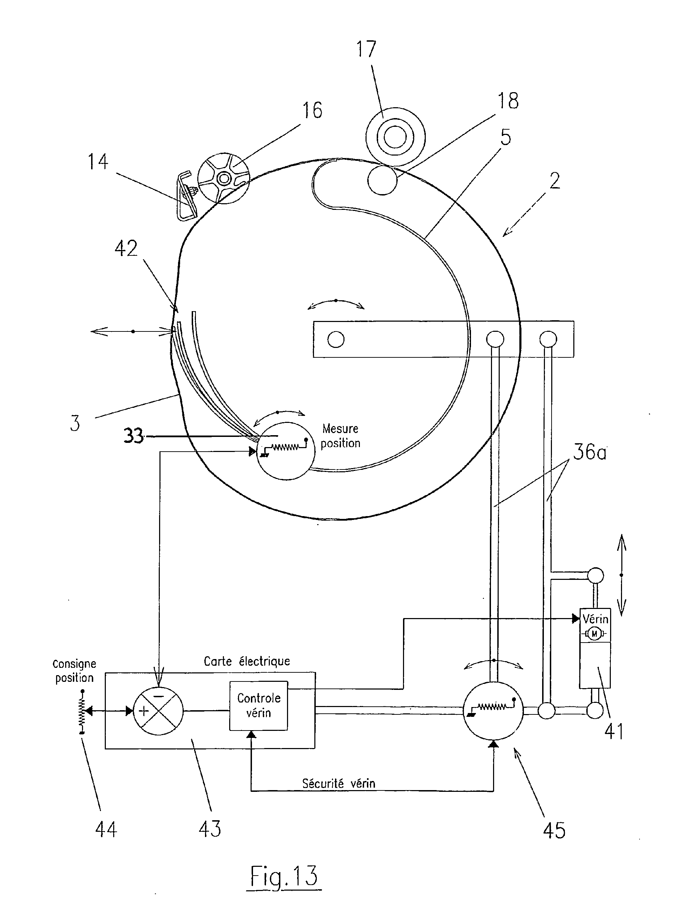

La figure 13 est une vue synoptique de l'asservissement d'un module d'effeuillage.

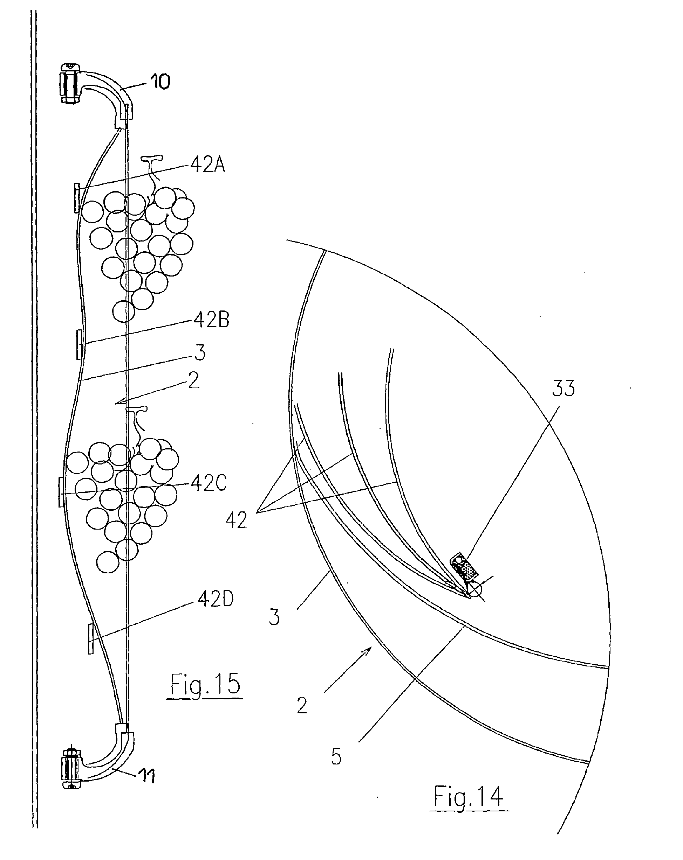

La figure 14 est une vue de détail et en plan, illustrant un palpeur logé dans le tambour tournant pour détecter les déformations de la paroi latérale souple dudit tambour lorsque ce dernier se déplace en roulant sur la végétation du rang de vigne.
La figure 15 est une vue de détail et en coupe verticale, illustrant la déformation de la paroi souple du tambour tournant détectée par les palpeurs superposés, lors de son passage sur des obstacles (ici des grappes de raisin).
La figure 16 est une vue à caractère schématique et en plan illustrant la conformation cylindrique de la paroi latérale du tambour de la tête d'effeuillage lorsque ce dernier roule sur le matelas végétal sans rencontrer d'obstacles.
La figure 17 est une vue analogue à la figure 16 et montrant l'effacement de la surface latérale d'appui du tambour tournant lorsque celui-ci rencontre un obstacle (grappes de raisin, par exemple).
La figure 18 est une vue séquentielle illustrant le fonctionnement du système d'asservissement des modules ou têtes d'effeuillage.

On se reporte auxdits dessins pour décrire un exemple de réalisation avantageux, bien que nullement limitatif, de l'effeuilleuse selon l'invention.

Bien que l'on se réfère, dans la suite du présent exposé, uniquement à l'utilisation de cette effeuilleuse pour réaliser un effeuillage sélectif de la vigne, il est évident qu'un tel emploi n'est pas limitatif et que cette machine pourrait être utilisée pour réaliser l'effeuillage d'autres plantes cultivées sous forme d'arbustes alignés.

Cette effeuilleuse est du genre décrit dans le document FR-2.808.964 A. Elle comprend au moins une tête ou module d'effeuillage 1 comportant un tambour rotatif aspirant 2 constitué d'une paroi cylindrique ajourée 3. De manière préférée, l'effeuilleuse comporte deux têtes ou modules d'effeuillage 1 destinées à être placées de part et d'autre de la végétation du rang de vigne, en cours de travail, de sorte à enserrer les zones fructifères, tout au long de son déplacement d'un bout à l'autre du rang.

Le tambour ajouré a, par exemple, une hauteur comprise entre 400 mm et 800 mm, suivant les modèles d'effeuilleuses, et un diamètre de l'ordre de 450 mm.

Une turbine aspirante, par exemple constituée par un aspirateur hélicoïdal 4 actionné par un moteur hydraulique M1, est installée au-dessus du tambour 2, pour créer une dépression à l'intérieur dudit tambour, laquelle génère un flux d'aspiration traversant la paroi latérale ajourée de ce dernier, en provoquant le "collage" des feuilles du matelas végétal sur ladite paroi ajourée ou grille du tambour.

A l'intérieur du tambour 2, est logé, fixement, à proximité de la paroi latérale ajourée 3 de ce dernier, un moyen pour canaliser le flux d'air, ce moyen étant avantageusement constitué par un déflecteur 5, dont la forme est déterminée pour optimiser le rendement du système d'aspiration. Ce déflecteur 5 comporte une paroi latérale 5a et un fond 5b par l'intermédiaire duquel il est relié rigidement à un élément horizontal inférieur 6a du bâti 6 de la tête d'effeuillage, par exemple au moyen d'un axe 7 supportant le roulement inférieur 8 assurant le guidage en rotation du tambour 2.

Une ouverture 9 est ménagée dans la paroi latérale 5a du déflecteur. Cette ouverture s'étend, par exemple, sur une hauteur sensiblement égale à la hauteur de la paroi latérale ajourée 3 du tambour rotatif et présente une largeur de l'ordre de 220 mm à 260 mm correspondant à un arc de l'ordre de 70° à 80°.

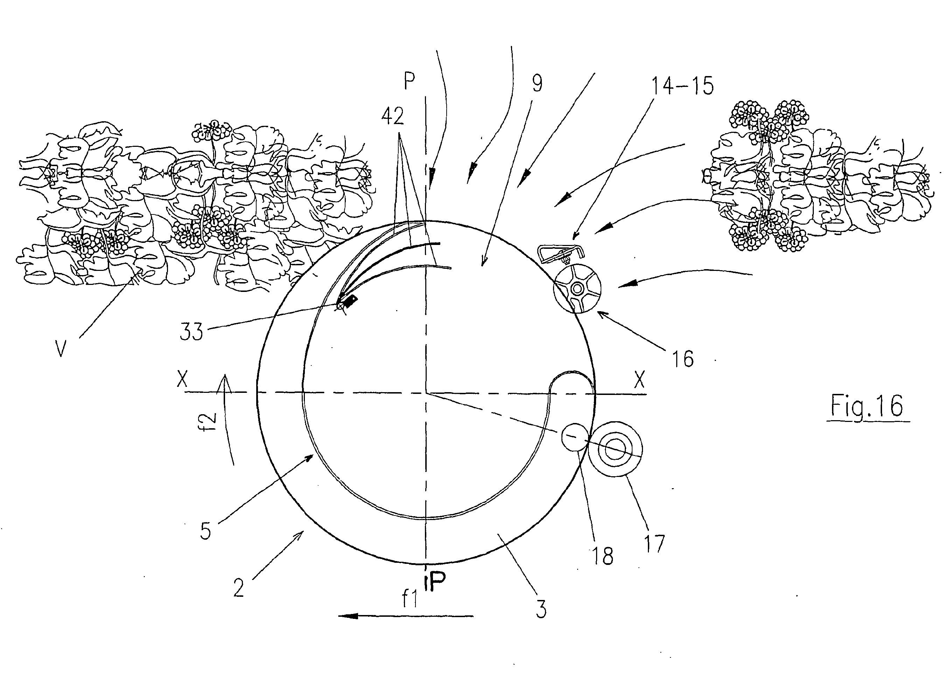

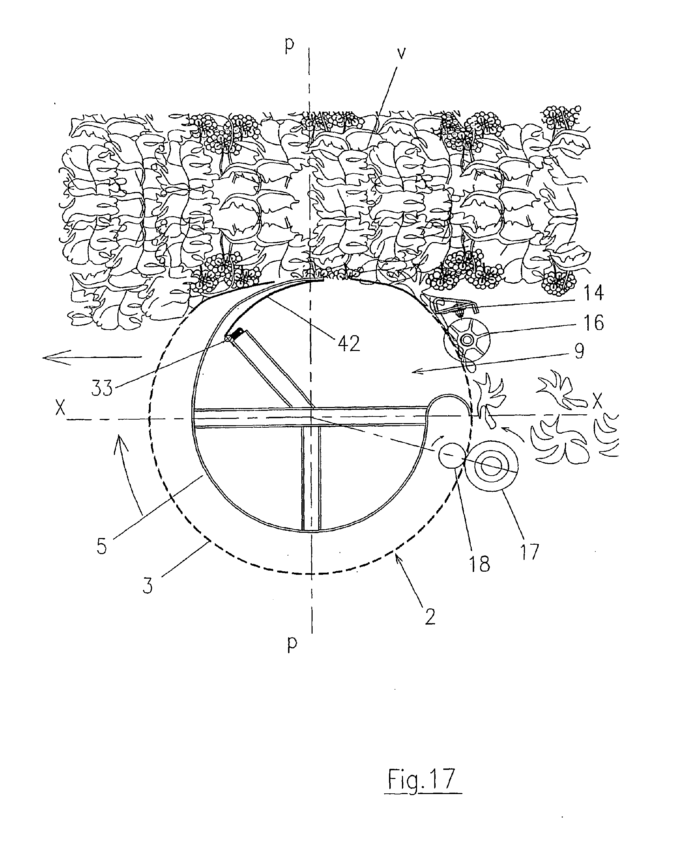

La majeure partie de l'aire correspondant à la largeur de l'ouverture 9 est disposée en arrière d'un plan diamétral P-P du tambour à claire-voie rotatif 2 perpendiculaire à l'axe de déplacement X-X de la tête d'effeuillage 1, en cours de travail, comme le montrent les figures 16 et 17.

L'ouverture 9 du déflecteur 5 est disposée à proximité de la paroi cylindrique ajourée 3 du tambour rotatif 2, de sorte que ledit déflecteur assure, d'une part, l'étanchéité sur une grande partie du pourtour du tambour ajouré, et, d'autre part, il canalise, à l'intérieur dudit tambour, l'air aspiré par l'ouverture 9. On comprend que l'air aspiré par la turbine 4 se trouve canalisé sous forme d'un flux aspirant traversant une portion changeante de ladite paroi cylindrique tournante, l'emplacement et les dimensions de cette portion de paroi ajourée correspondant sensiblement à ceux de ladite ouverture.

L'ouverture 9 et la portion de paroi ajourée défilante qui se trouve devant celle-ci, constituent ainsi une bouche d'aspiration disposée dans une zone du tambour destinée à se trouver en contact avec le matelas végétal du rang de vigne.

Suivant ce principe d'aspiration des feuilles par contact direct avec le matelas végétal, il apparaît que le flux de dépression nécessaire pour happer et plaquer les feuilles contre la paroi cylindrique ajourée du tambour peut être relativement faible par rapport aux effeuilleuses des autres types qui se tiennent relativement éloignées du matelas végétal, ce qui nécessite une dépression très importante, donc beaucoup de puissance pour aspirer les feuilles dans le système de sectionnement.

Le déflecteur fixe 5 présente, latéralement, une forme approximativement cylindrique.

Dans le principe de la cage rotative à contact, l'intensité de l'effeuillage est proportionnelle à la dépression générée par l'aspirateur. Le volume de feuilles supprimées pourra donc être réglé en fonction de la force d'aspiration du ventilateur. Cette régulation de la force d'aspiration peut, par exemple, être réalisée soit en faisant varier la vitesse de rotation de la turbine, soit en freinant la sortie d'air de la turbine.

Les feuilles sont collées par aspiration sur la grille cylindrique du tambour rotatif. Sous l'effet conjugué de succion pneumatique et de rotation mécanique du tambour, les feuilles sont tirées du matelas végétal. Les feuilles, plus légères que les grappes, offrent également une plus grande surface d'aspiration, de sorte qu'une dépression relativement faible, par différence de densité, suffit pour "coller" les feuilles contre la surface latérale ajourée du tambour rotatif, sans pour autant attirer les grappes.

Un moyen de coupe est installé à proximité de la bouche d'aspiration 9 du tambour rotatif, parallèlement ou sensiblement parallèlement à l'axe de rotation A-A de ce dernier.

Le moyen de coupe peut être avantageusement constitué par une barre de coupe alternative 14 comprenant une lame mobile 14a et une contre-lame fixe 14b, ou par une barre de coupe à déplacement linéaire, ou par tout autre dispositif.

La barre de coupe 14 est orientée de sorte à former un angle de +/- 45° et, de préférence, un angle de l'ordre de 20° avec un rayon du tambour d'aspiration tournant 2 passant par le bord actif de ladite barre de coupe. Elle s'étend, de préférence, sur une hauteur correspondant à la hauteur de la portion latérale ajourée du tambour traversée par le flux aspirant. Une tige horizontale rigide en forme de ski 38 est fixée sur la partie inférieure du bâti de la tête d'effeuillage ; cette tige s'étend devant l'extrémité inférieure de la barre de coupe 14, afin de protéger cette dernière, par exemple en cas de rencontre d'un cep très tortueux.

Selon une importante disposition caractéristique de l'invention, la paroi latérale 3 du tambour rotatif 2, est constituée par un matériau souple perméable au courant d'air. Ce matériau souple et perméable au courant d'air peut être avantageusement constitué par un tissu métallique formé d'une multitude de mailles ou anneaux métalliques entrelacés. Un tissu souple métallique de ce genre est généralement désigné sous le nom de "cotte de mailles". Les petits anneaux constituant ce tissu métallique ont, par exemple, un diamètre de l'ordre de 4 mm et une épaisseur de l'ordre de 5/10 mm.

Les bords supérieur et inférieur de cette paroi latérale souple ajourée 3 sont fixés à des éléments d'extrémité circulaires supérieur 10 et inférieur 11, respectivement, ces éléments d'extrémité étant exécutés dans une matière déformable semi-rigide telle que, par exemple, caoutchouc, polyuréthannes ou autre matière plastique déformable semi-rigide.

Le tambour ajouré ainsi réalisé est suspendu, avec une aptitude de rotation, par l'intermédiaire de son élément d'extrémité supérieur 10 et de galets 12, au carter 13 renfermant la turbine aspirante 4. L'élément supérieur 10 du tambour 2 est, par exemple, solidaire en rotation d'un rail circulaire 10a se déplaçant sur des galets 12 à axes verticaux montés sur la paroi cylindrique du carter 13, et soumis à l'action de moyens élastiques de pression contre ledit rail.

Un ressort 45 agissant en compression et disposé autour de l'axe vertical 7, est interposé entre le fond 5b du déflecteur 5 et le roulement 8 inférieur de guidage du tambour 2, constituant un élément du fond mobile verticalement de ce dernier, afin de tendre la cotte de mailles 3 dans la direction verticale.

Les parties 5c, 5d du déflecteur 5 qui délimitent la bouche d'aspiration du tambour tournant 2, frottent contre la surface interne de la paroi latérale 3 dudit tambour. Dans ce but, au moins lesdites parties 5c, 5d du déflecteur 5 sont réalisées dans un matériau souple.

De manière avantageuse, le déflecteur 5 peut être exécuté dans une matière souple, telle que, par exemple, une toile imperméable fixée sur une armature rigide ou semi-rigide.

Selon une autre disposition caractéristique de l'invention, un moyen de tirage complémentaire des feuilles est disposé en arrière du moyen de coupe 14 en considérant le sens d'avancement de l'effeuilleuse, en cours de travail; ou, plus précisément, le sens inverse au sens de rotation du tambour tournant 2 de la tête d'effeuillage de la machine.

De manière avantageuse, ce moyen de tirage complémentaire peut être constitué par un ameneur rotatif 16 tangent à la paroi latérale 3 du tambour 2 et accouplé à un dispositif d'entraînement en rotation , cet ameneur rotatif étant disposé parallèlement à la barre de coupe 14 et en retrait de cette dernière par rapport à la végétation, en cours de travail.

Cet ameneur rotatif 16 comprend, par exemple, un axe 16a le long duquel sont fixées des pales souples verticales 16b orientées radialement ou avec une inclinaison d'avant en arrière en considérant le sens de rotation dudit axe.

Il peut également être constitué par une brosse rotative.

L'ameneur rotatif 16 est disposé près de la barre de coupe et il se trouve placé en contact avec la paroi latérale souple 3 du tambour 2, ou très près de celle-ci (l'espace maximum étant de l'ordre de 8 mm). L'ameneur rotatif 16 et le tambour aspirant 2 sont entraînés en rotation en sens contraire et "en avalant". Les feuilles plaquées sur la paroi latérale ajourée du tambour tournant 2 sous l'effet de la dépression créée par la turbine 4, se trouvent ensuite pincées entre ladite paroi et ledit ameneur et tirées vers l'arrière dudit tambour. Le pinçage se combine à l'aspiration maintenant les feuilles plaquées contre la paroi latérale du tambour, pour améliorer le tirage des feuilles, lesquelles sont détachées lorsque leurs pétioles sont sectionnés par la barre de coupe.

Selon un mode d'exécution de l'invention, un peigne 15 peut être disposé parallèlement et en avant de ladite barre de coupe, en considérant le sens d'avancement de l'effeuilleuse (flèche f1), ou, plus précisément, le sens inverse au sens de rotation (flèche f2) du tambour tournant, en cours de travail (figure 16). Ce peigne 15 comporte une pluralité de dents ou barrettes horizontales superposées, faiblement espacées, l'espace entre dents étant, par exemple, de l'ordre de 5 à 15 mm.

De préférence, ce peigne 15 est interchangeable et il est, par exemple, fixé de manière démontable sur la contre-lame fixe 14b de la barre de coupe.

De la sorte, il est possible de monter rapidement un peigne dont les espaces entre dents soient adaptés à l'état de la végétation, lequel peut être très variable en fonction de la période d'effeuillage ou de la variété de raisin.

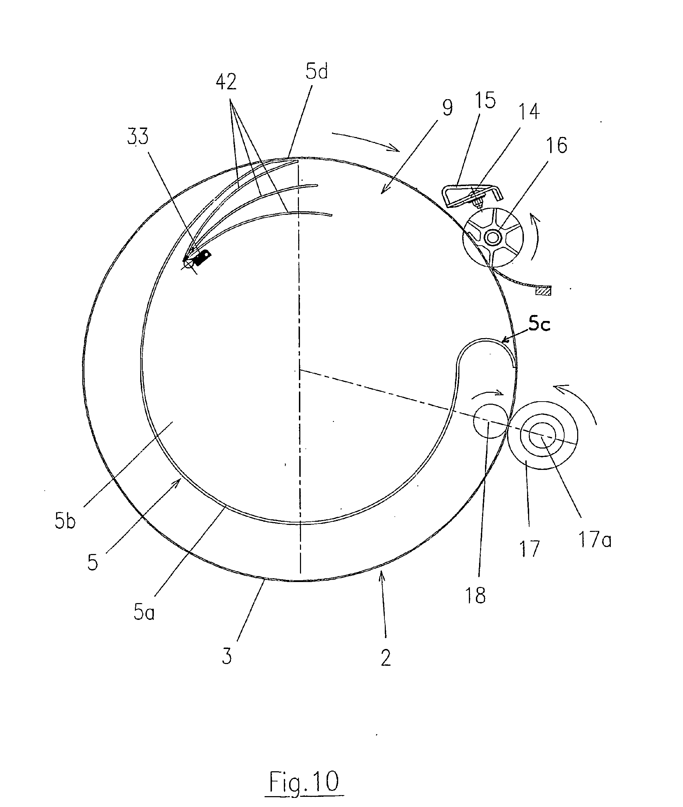

L'entraînement en rotation du tambour 2 est réalisé au moyen d'un rouleau moteur vertical 17 et d'un contre-galet à axe vertical 18 ou d'un couple de contre-galets 18' à axes verticaux parallèles monté avec une aptitude de pivotement autour d'un axe vertical, à la façon d'un boggie (figure 10). Le rouleau moteur 17 est disposé à l'extérieur du tambour 2 tandis que le contre-galet 18 ou le couple de contre-galets 18' est placé à l'intérieur dudit tambour. La paroi latérale souple ajourée 3 de ce dernier est pincée entre le rouleau moteur 17 et le contre-galet 18, ou le couple de contre-galets 18', de sorte que la mise en rotation dudit rouleau moteur a pour effet d'entraîner en rotation le tambour 2 suspendu au moyen des galets de roulement 12.

Le contre-galet 18 ou le couple de contre-galets 18' est soumis à l'action de moyens élastiques de poussée 37 qui le maintiennent en permanence en pression contre la surface interne de la paroi latérale souple 3 du tambour qui se trouve ainsi constamment maintenue appliquée, contre le rouleau d'entraînement 17.

Une bavette verticale souple 39 fixée à un élément vertical rigide 40 du bâti de la tête d'effeuillage, peut être disposée en arrière du rouleau de tirage 16, afin d'empêcher que les feuilles ou les sarments coupés ne puissent être pris entre le rouleau moteur 17 et la paroi latérale 3 du tambour 2.

Une motorisation commune permet :
- l'entraînement en rotation du tambour tournant 2 ;
- l'actionnement de la barre de coupe 14 ;
- l'entraînement en rotation de l'ameneur 16.

Cette motorisation commune comprend, par exemple, un moteur hydraulique M2 dont l'arbre de sortie 19 est accouplé à l'arbre vertical 20 d'un excentrique 21 dont la bielle 22 est accouplée, par l'intermédiaire d'une rotule 23 et d'une biellette 24, à l'extrémité supérieure de la lame 14a de la barre de coupe 14. De la sorte, la mise en rotation de l'arbre 20 de l'excentrique 21 assure un déplacement longitudinal alternatif de la lame 14a de la barre de coupe.

L'extrémité inférieure de l'arbre vertical 20 de l'excentrique est reliée, par exemple par l'intermédiaire d'un arbre d'accouplement 25, à l'extrémité supérieure de l'axe 16a de l'ameneur rotatif 16. On comprend que la mise en rotation de l'arbre 20 de l'excentrique 21 assure également la rotation de l'ameneur 16 disposé dans le prolongement axial dudit arbre.

La motorisation comprend encore un arbre vertical 26 disposé à distance de l'arbre vertical d'accouplement 25 et relié à ce dernier par une transmission, par exemple constituée par un lien souple s'enroulant sur des roues calées sur lesdits arbres 25, 26, respectivement. De préférence, cette transmission comprend une courroie 27 s'enroulant, d'une part, sur une poulie 28 calée sur l'arbre d'accouplement 25, et, d'autre part, sur une poulie 29 calée sur l'arbre 26 dont l'extrémité inférieure est accouplée à l'extrémité supérieure de l'axe vertical 17a du rouleau d'entraînement 17. La poulie réceptrice 29 a un diamètre approximativement égal ou légèrement plus important que celui de la poulie motrice 28, de sorte que lors de la mise en rotation de l'arbre 25, l'arbre 26 se trouve entraîné en rotation à une vitesse sensiblement égale ou un peu plus lente que celle de l'arbre 25.

Autrement dit, la vitesse tangentielle de l'ameneur tournant 16 est au moins égale à la vitesse tangentielle du tambour 2, ou légèrement supérieure à cette dernière.

D'autre part, la vitesse de rotation du tambour 2 est égale ou approximativement égale à la vitesse d'avancement de l'effeuilleuse, en cours de travail. Si l'on considère que le ou les tambours 2 de l'effeuilleuse roule(nt) sur la végétation V, il en résulte, à un instant T, un contact immobile du ou desdits tambours par rapport à la végétation. Il n'y a donc pas de frottement entre le feuillage, les grappes de raisin et la paroi latérale 3 des tambours.

La motorisation décrite précédemment est logée dans un carter 30 fixé, latéralement, à un élément supérieur 6b de l'ossature de la tête d'effeuillage. Les arbres verticaux 20 et 26 sont montés tournants, dans des roulements 31 et 32, respectivement, installés dans le carter 30.

Selon une autre disposition caractéristique de l'invention, l'effeuilleuse comporte un système d'asservissement permettant à sa tête d'effeuillage 1 ou à chacune de ses têtes ou modules d'effeuillage 1, de suivre le profil du matelas végétal tout en régulant l'effort de contact du ou des tambours 2 sur ledit matelas végétal, afin de ne pas écraser les grappes de raisin. Dans le cas d'une effeuilleuse munie de deux têtes d'effeuillage symétriques, chaque tête d'effeuillage est asservie indépendamment de l'autre.

Le système d'asservissement comprend au moins un capteur 33 logé à l'intérieur du tambour tournant 2, à proximité de la paroi latérale ajourée souple 3 de celui-ci. De manière avantageuse, plusieurs capteurs superposés sont positionnés à l'intérieur du tambour tournant 2, de préférence à égale distance les uns des autres, les palpeurs extrêmes (supérieur et inférieur) de cet alignement vertical étant disposés à distance des bords supérieur et inférieur, respectivement, de la paroi latérale ajourée 3.

Les capteurs 33 peuvent être avantageusement constitués par des capteurs à effet Hall installés fixement et accouplés à des palpeurs superposés 42A, 42B, 42C, 42D, ... placés au contact de la paroi latérale souple ajourée 3 du tambour 2.

Chaque palpeur 42 est, par exemple, constitué par une tige de contact de forme courbe supportant un aimant coopérant avec le capteur à effet Hall 33 auquel ledit palpeur est associé, de sorte que les mouvements de ce dernier sont détectés et mesurés par ledit capteur.

Par conséquent, les capteurs 33 permettent de déceler et de mesurer les déformations de la paroi latérale souple du tambour, résultant de la rencontre d'obstacles ou d'une pression anormale du tambour d'effeuillage sur la végétation. Ils permettent d'actionner les organes électromécaniques ou autres commandant le positionnement du tambour d'effeuillage par rapport à la végétation ou matelas végétal V, et, par suite, de corriger la position dudit tambour et d'assurer un suivi continu du matelas végétal.

La souplesse de la paroi latérale 3 permet d'appuyer sur chaque palpeur 42A, 42B, 42C, 42D, ..., sur une course de l'ordre de 60 mm.

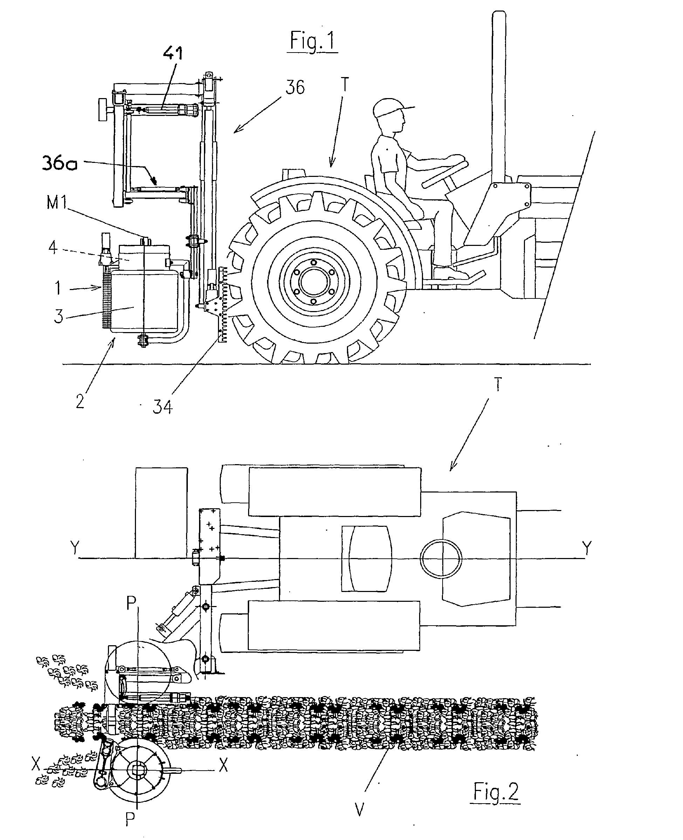

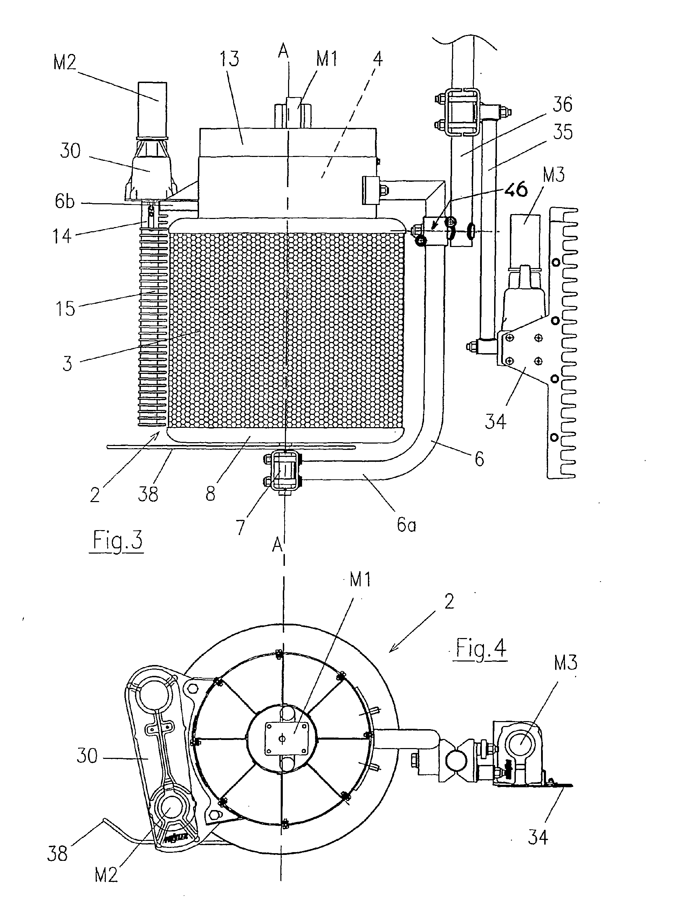

La tête d'effeuillage ou chaque tête d'effeuillage 1 de l'effeuilleuse est portée par un châssis 36, permettant son montage à l'arrière (figures 1 et 2) ou à l'avant d'un tracteur agricole. Elle est suspendue de manière pendulaire, par exemple au moyen d'une articulation à axe horizontal 46, reliant un élément vertical de son ossature 6 à un élément vertical du châssis 36 (figure 3).

Ce châssis porteur 36 est (de manière connue en soi) agencé et équipé de moyens permettant :
- d'écarter ou de rapprocher la tête d'effeuillage ou chaque tête d'effeuillage 1, de l'axe d'avancement Y-Y de l'effeuilleuse, lesdits moyens comprenant avantageusement un parallélogramme déformable de suspension 36a que présente la partie supérieure dudit châssis ;
- de régler la position du ou des tambours d'effeuillage 2 par rapport à la verticale ;
   ces mouvements étant commandés par le système d'asservissement en fonction des informations transmises par les capteurs 33.

Le système d'asservissement comprend encore un actionneur 41, par exemple constitué par un vérin électrique pourvu d'une carte électronique 43 de gestion de l'asservissement grâce à un algorithme permettant de déterminer les déformations successives de la paroi latérale souple du tambour, en fonction des consignes envoyées par les capteurs 33. Un potentiomètre 44 permet d'ajuster cette consigne, pour régler la pression du module d'effeuillage sur la végétation.

La carte électronique 43 envoie des informations à l'actionneur 41 qui agit sur le parallélogramme déformable 36a auquel est suspendue la tête d'effeuillage 1, ou chaque tête d'effeuillage (1), de sorte à obtenir une position optimum des tambours d'effeuillage 2 par rapport à la végétation, en cours de travail. Un potentiomètre 45 accouplé à l'axe principal du parallélogramme, limite la course minimale et maximale du vérin.

Selon ce système d'asservissement, on définit une position repoussée intermédiaire des palpeurs correspondant par exemple à un enfoncement de l'ordre de 20 mm et suivant laquelle la tête d'effeuillage conserve une position stable ; un enfoncement plus important des palpeurs entraîne un recul de la tête d'effeuillage, tandis que le relâchement desdits palpeurs entraîne le déplacement de ladite tête d'effeuillage et son application contre le matelas végétal.

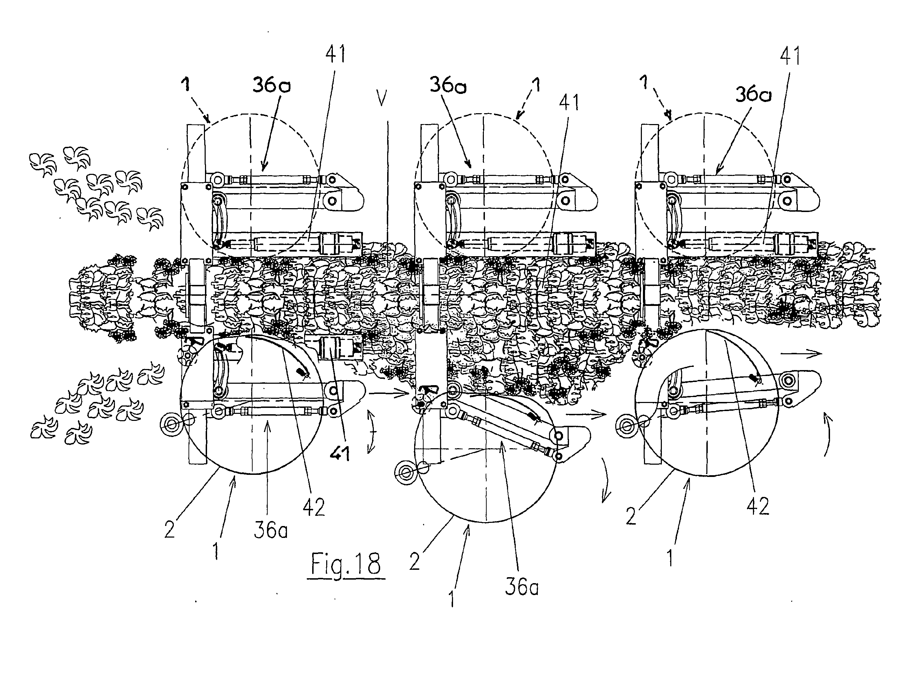

La représentation séquentielle de la figure 18 illustre ce fonctionnement. Sur la gauche de la figure, la pression de la végétation contre la paroi latérale du tambour 2 de la tête d'effeuillage 1 est normale, les palpeurs sont moyennement enfoncés, la position de la tête d'effeuillage est stable. Au centre de la figure, le matelas végétal présente une partie proéminente, la pression de la végétation contre la paroi latérale du tambour est plus importante, les palpeurs 42 sont très enfoncés, et activent les capteurs 33 qui envoient des consignes à la carte électronique 43, la tête d'effeuillage 1 recule. Sur la droite de la figure, la végétation n'est plus en contact avec le tambour 2 de la tête d'effeuillage 1, les palpeurs sont relâchés, la tête d'effeuillage vient se presser contre la végétation. Lorsqu'il y a un trou dans la végétation, les palpeurs 42 sont totalement décomprimés et la tête d'effeuillage se rapproche de l'axe du rang de vigne.

De manière avantageuse et connue en soi (WO-01/87047A), une barre de coupe 34 ou autre moyen de coupe, tel qu'une barre de coupe alternative peut être disposée verticalement devant le tambour rotatif de la tête d'effeuillage ou de chaque tête d'effeuillage. Cette barre de coupe 34 actionnée par un moteur hydraulique M3 et portée par un élément 35 du châssis de l'effeuilleuse, est disposée à une distance suffisante du tambour d'effeuillage 2, de sorte que les bris de coupe ne perturbent pas le travail de l'effeuilleuse.

Lorsque l'effeuilleuse comporte deux têtes d'effeuillage, celles-ci sont disposées de part et d'autre du rang de vigne et peuvent se déplacer de façon à plus ou moins enserrer ledit rang et également s'ouvrir et se refermer à l'entrée et à la sortie du rang, respectivement. L'effeuillage est donc possible sur les deux faces du rang ou, alternativement, sur l'une ou l'autre des faces. Lors de l'effeuillage sur une seule face, le tambour qui se trouve de l'autre côté du palissage peut continuer de rouler sur la végétation, ce qui permet au palissage d'être maintenu entre les deux tambours et de ne pas être poussé d'un côté ou de l'autre. L'absence d'action d'effeuillage sur le côté où cette action n'est pas souhaitée est obtenue par l'arrêt de l'aspirateur de la tête d'effeuillage inactive.

L'effeuilleuse selon l'invention peut être installée facilement sur un tracteur interligne, ou sur un tracteur enjambeur, ou sur un porte-outil multifonction ; elle peut être également automotrice.

## Revendications

1. Effeuilleuse plus spécialement destinée à l'effeuillage de la vigne, comprenant au moins une tête d'effeuillage (1) munie d'un tambour tournant comportant une paroi latérale cylinque ajourée (3), des moyens (17-18) d'entraînement en rotation de ce tambour, un moyen d'aspiration (4) permettant de générer un flux d'air aspirant traversant la paroi latérale cylindrique ajourée (3) dudit tambour, un moyen (5) pour canaliser ce flux d'air à travers une portion changeante de ladite paroi latérale, et un moyen de coupe (14) installé à proximité de ladite portion de paroi latérale du tambour aspirant tournant, et orienté parallèlement ou sensiblement parallèlement à l'axe de rotation (A-A) de ce dernier, **caractérisée en ce que** la paroi cylindrique ajourée (3) du tambour (2) est réalisée dans un matériau souple et déformable, perméable au courant d'air et fixée à des éléments d'extrémités circulaires supérieur (10) et inférieur (11), exécutés dans une matière déformable semi-rigide.

2. Effeuilleuse selon la revendication 1, **caractérisée en ce que** la paroi cylindrique ajourée (3) du tambour (2) est constituée par un tissu métallique constitué de mailles ou anneaux métalliques entrelacés, du genre "cotte de mailles".

3. Effeuilleuse selon l'une des revendications 1 ou 2, **caractérisée en ce que** la vitesse tangentielle de rotation du tambour (2) est au moins égale à la vitesse d'avancement de ladite effeuilleuse, en cours de travail.

4. Effeuilleuse selon la revendication 3, **caractérisée en ce que** le tambour (2) est suspendu, avec une aptitude de rotation, au moyen de son élément d'extrémité supérieur circulaire (10).

5. Effeuilleuse selon l'une quelconque des revendications 1 à 4, **caractérisée en ce qu'**elle comporte des moyens de tension de la paroi souple (3), dans la direction verticale.

6. Effeuilleuse suivant la revendication 5, **caractérisée en ce que** lesdits moyens de tension sont constitués par un ressort (45) agissant en compression et disposé autour de l'axe de rotation inférieur (7) du tambour, ce ressort étant calé contre la partie inférieure (8) de ce dernier.

7. Effeuilleuse selon l'une quelconque des revendications 1 à 6, **caractérisée en ce qu'**un moyen (16) de tirage complémentaire des feuilles est disposé parallèlement à l'axe du tambour (2), et en retrait de la barre de coupe (14), par rapport à la végétation, en cours de travail.

8. Effeuilleuse selon la revendication 7, **caractérisée en ce que** le moyen de tirage complémentaire des feuilles est constitué par un ameneur tournant (16) accouplé à un dispositif d'entraînement en rotation (M2).

9. Effeuilleuse suivant l'une des revendications 7 ou 8, **caractérisée en ce que** le moyen de tirage complémentaire des feuilles (16) est placé au contact de la paroi latérale (3) du tambour (2) ou très près de ce dernier.

10. Effeuilleuse selon l'une des revendications 8 ou 9, **caractérisée en ce que** l'ameneur tournant (16) comprend un axe (16a) le long duquel sont fixées des pales verticales souples (16b).

11. Effeuilleuse suivant l'une des revendications 8 ou 9, **caractérisée en ce que** l'ameneur tournant (16) est constitué par une brosse.

12. Effeuilleuse suivant l'une quelconque des revendications 8 à 11; **caractérisée en ce que** la vitesse tangentielle de l'ameneur tournant (16) est au moins égale à la vitesse tangentielle du tambour d'effeuillage (2).

13. Effeuilleuse suivant l'une des revendications 1 ou 7, **caractérisée en ce qu'**un peigne (15) est disposé parallèlement et en avant de la barre de coupe (14), en considérant le sens d'avancement de ladite effeuilleuse, en cours de travail.

14. Effeuilleuse selon l'une quelconque des revendications 1 à 13, **caractérisée en ce que** l'ensemble de coupe (14-15 ; 14-15-16) est disposé en arrière d'un plan diamétral (P-P) du tambour tournant (2) orienté perpendiculairement à l'axe d'avancement (X-X) de la tête d'effeuillage (1), en cours de travail.

15. Effeuilleuse, suivant l'une quelconque des revendications 1 à 14, **caractérisée en ce que** les portions verticales (5c, 5d) qui délimitent l'ouverture d'aspiration (9) du moyen de canalisation du flux d'air (5) frottent contre la surface interne de la paroi latérale (3) du tambour (2) et **en ce que** ces portions verticales (5c, 5d) sont exécutées dans un matériau imperméable souple.

16. Effeuilleuse selon la revendication 15, **caractérisée en ce que** le moyen pour canaliser le flux d'air (5) est constitué par une toile imperméable fixée sur une armature rigide ou semi-rigide.

17. Effeuilleuse selon l'une quelconque des revendications 1 à 16, **caractérisée en ce que** la barre de coupe verticale (14) a une orientation suivant laquelle elle forme un angle de l'ordre de +/- 45° et, de préférence, un angle de l'ordre de 20° avec un rayon du tambour tournant d'aspiration passant par le bord actif de ladite barre de coupe.

18. Effeuilleuse selon l'une quelconque des revendications 1 à 17, **caractérisée en ce que** les moyens d'entraînement en rotation du tambour (2) comprennent un rouleau moteur vertical (17) disposé à l'extérieur du tambour (2) et au moins un contre-galet vertical (18) placé à l'intérieur dudit tambour, la paroi cylindrique ajourée (3) de ce dernier se trouvant pincée entre ledit rouleau moteur (17) et le dit contre-galet (18).

19. Effeuilleuse suivant l'une quelconque des revendications 1 à 17, **caractérisée en ce que** les moyens d'entraînement en rotation du tambour (2) comprennent un rouleau moteur vertical (17) disposé à l'extérieur du tambour (2) et une paire de contre-galets (18') à axes parallèles placée à l'intérieur dudit tambour et montée avec une aptitude de pivotement autour d'un axe vertical à la façon d'un boggie, la paroi cylindrique ajourée (3) du tambour se trouvant pincée entre ledit rouleau moteur (17) et ladite paire de contre-galets (18').

20. Effeuilleuse suivant l'une des revendications 18 ou 19, **caractérisée en ce qu'**elle comporte une motorisation commune (M2) assurant :
- l'entraînement en rotation du tambour tournant (2) ;
- l'actionnement de la barre de coupe (14), et
- l'entraînement en rotation de l'ameneur (16).

21. Effeuilleuse suivant la revendication 20, **caractérisée en ce que** ladite motorisation commune comprend un moteur hydraulique (M2) entraînant :
- un excentrique dont la bielle (22) est accouplée à l'extrémité supérieure de la lame (14a) de la barre de coupe (14) ;
- un arbre d'accouplement reliant l'arbre vertical (20) de l'excentrique (21) et l'extrémité supérieure de l'axe (16a) de l'ameneur (16) ;
- et un arbre vertical (26) d'entraînement du rouleau moteur (17) disposé à distance de l'arbre vertical d'accouplement (25) et relié à ce dernier par une transmission (27, 28, 29).

22. Effeuilleuse selon l'une des revendications 18 ou 19 **caractérisée en ce que** le contre-galet (18) ou la paire de contre-galets (18') est soumis(e) à l'action de moyens élastiques de poussée (37) qui le maintiennent en permanence en pression contre la surface interne de la paroi latérale (3) du tambour (2).

23. Effeuilleuse suivant l'une quelconque des revendications 1 à 22, suivant laquelle la tête d'effeuillage ou chaque tête d'effeuillage (1) est suspendue à un châssis porteur (36) agencé et équipé de moyens (36a) permettant de l'écarter ou de la rapprocher de l'axe d'avancement (Y-Y) de ladite effeuilleuse, **caractérisée en ce que** la position de travail de ladite tête d'effeuillage ou de chacune desdites têtes d'effeuillage par rapport audit axe (Y-Y) est régulée par un système d'asservissement agissant en fonction des déformations supportées par la paroi latérale souple (3) du tambour (2), en cours de travail.

24. Effeuilleuse selon la revendication 23, **caractérisée en ce que** le système d'asservissement comprend des moyens de détection (33, 34) des déformations de la paroi latérale (3) du tambour (2), logés à l'intérieur dudit tambour.

25. Effeuilleuse suivant la revendications 24, **caractérisée en ce que** les moyens de détection comprennent au moins un capteur (33) logé à l'intérieur du tambour tournant (2), à proximité de la paroi latérale souple ajourée (3) dudit tambour.

26. Effeuilleuse selon la revendication 25, **caractérisée en ce que** les moyens de détection comprennent plusieurs capteurs (33) positionnés à l'intérieur du tambour tournant (2) en alignement vertical, à distance les uns des autres.

27. Effeuilleuse suivant l'une des revendications 25 ou 26, **caractérisée en ce que** le capteur (33) ou chaque capteur (33) est constitué par un capteur à effet Hall accouplé à un palpeur (42A, 42B, 42C, 42D, ...) par exemple constitué par une tige de contact, de préférence de forme courbe, en contact avec la paroi souple (3) du tambour, ledit palpeur supportant un aimant coopérant avec le capteur à effet Hall monté fixement, pour détecter et mesurer les déformations de ladite paroi souple.

28. Effeuilleuse selon l'une quelconque des revendications 21 à 27, **caractérisée en ce que** le système d'asservissement comporte un vérin électrique (41) muni d'une carte électronique (43) de gestion de l'asservissement grâce à un algorithme permettant de déterminer les déformations successives de la paroi latérale (3) du tambour d'effeuillage (2), en fonction de l'analyse et du traitement des signaux émis par les capteurs 33, ledit système d'asservissement agissant sur un parallélogramme déformable (36a) auquel est suspendue la tête d'effeuillage (1), ou chaque tête d'effeuillage (1), de sorte à obtenir une position optimum du tambour d'effeuillage par rapport à la végétation, en cours de travail.

## Claims

1. A leaf stripper more especially intended for vine leaf stripping, comprising at least one leaf stripping head (1) provided with a rotating drum comprising an apertured cylindrical side wall (3), means (17-18) for driving the drum in rotation, a suction means (4) for generating a suction air flow passing through the apertured cylindrical side wall (3) of said drum, a means (5) for channelling said air flow through a changing portion of said side wall, and a cutting means (14) installed in the proximity of said side wall portion of the rotating suction drum and oriented parallel or substantially parallel to the axis of rotation (A-A) of the latter, **characterised in that** the apertured cylindrical wall (3) of the drum (2) is made of a flexible deformable material which is permeable to the air flow and fixed to upper (10) and lower (11) circular end elements made of a semi-rigid deformable material.

2. A leaf stripper according to claim 1 **characterised in that** the apertured cylindrical wall (3) of the drum (2) is made of a metal gauze formed by interlaced metal rings or meshes of the 'coat of mail' kind.

3. A leaf stripper according to one of claims 1 and 2 **characterised in that** the tangential speed of rotation of the drum (2) is at least equal to the speed of advance movement of said leaf stripper in the course of operation.

4. A leaf stripper according to claim 3 **characterised in that** the drum (2) is suspended with a capability of rotation by means of its upper circular end element (10).

5. A leaf stripper according to any one of claims 1 to 4 **characterised in that** it comprises means for tensioning the flexible wall (3) in the vertical direction.

6. A leaf stripper according to claim 5 **characterised in that** said tensioning means are formed by a spring (45) acting in compression and arranged around the lower axis of rotation (7) of the drum, said spring being fixed against the lower part (8) of the latter.

7. A leaf stripper according to any one of claims 1 to 6 **characterised in that** a complementary pulling means (16) for the leaves is arranged parallel to the axis of the drum (2) and in set-back relationship with the cutting bar (14) with respect to the vegetation in the course of operation.

8. A leaf stripper according to claim 7 **characterised in that** the complementary leaf pulling means is formed by a rotating feeder (16) coupled to a rotary drive device (M2).

9. A leaf stripper according to one of claims 7 and 8 **characterised in that** the complementary leaf pulling means (16) is placed in contact with the side wall (3) of the drum (2) or very close to the latter.

10. A leaf stripper according to one of claims 8 and 9 **characterised in that** the rotating feeder (16) comprises a shaft (16a), along which are fixed vertical flexible blades (16b).

11. A leaf stripper according to one of claims 8 and 9 **characterised in that** the rotating feeder (16) is formed by a brush.

12. A leaf stripper according to any one of claims 8 to 11 **characterised in that** the tangential speed of the rotating feeder (16) is at least equal to the tangential speed of the leaf stripping drum (2).

13. A leaf stripper according to one of claims 1 and 7 **characterised in that** a comb (15) is disposed parallel to and in front of the cutting bar (14) in relation to the direction of advance movement of said leaf stripper in the course of operation.

14. A leaf stripper according to any one of claims 1 to 13 **characterised in that** the cutting assembly (14-15; 14-15-16) is disposed rearwardly of a diametral plane (P-P) of the rotating drum (2) oriented perpendicularly to the advance movement axis (X-X) of the leaf stripping head (1) in the course of operation.

15. A leaf stripper according to any one of claims 1 to 14 **characterised in that** the vertical portions (5c, 5d) which delimit the suction opening (9) of the air flow channelling means (5) rub against the internal surface of the side wall (3) of the drum (2) and that said vertical portions (5c, 5d) are made of a flexible impermeable material.

16. A leaf stripper according to claim 15 **characterised in that** the air flow channelling means (5) is formed by an impermeable cloth fixed on a rigid or semi-rigid framework.

17. A leaf stripper according to any one of claims 1 to 16 **characterised in that** the vertical cutting bar (14) is of an orientation whereby it forms an angle of the order of +/- 45° and preferably an angle of the order of 20° with a radius of the rotating suction drum passing through the active edge of said cutting bar.

18. A leaf stripper according to any one of claims 1 to 17 **characterised in that** the means for driving the drum (2) in rotation comprise a vertical motor roller (17) disposed on the outside of the drum (2) and at least one vertical counteracting roller (18) placed in the interior of said drum, the apertured cylindrical wall (3) of the latter being gripped between said motor roller (17) and said counteracting roller (18).

19. A leaf stripper according to any one of claims 1 to 17 **characterised in that** the means for driving the drum (2) in rotation comprise a vertical motor roller (17) disposed on the outside of the drum (2) and a pair of counteracting rollers (18') with parallel axes and disposed in the interior of said drum and mounted with a capability of pivotal movement about a vertical axis in the manner of a bogie, the apertured cylindrical wall (3) of the drum being gripped between said motor roller (17) and said pair of counteracting rollers (18').

20. A leaf stripper according to one of claims 18 and 19 **characterised in that** it comprises a common motorisation means (M2 providing for:
- driving the rotating drum (2) in rotation;
- actuating the cutting bar (14), and
- driving the feeder (16) in rotation.

21. A leaf stripper according to claim 20 **characterised in that** said common motorisation means comprises a hydraulic motor (M2) driving:
- an eccentric whose connecting rod (22) is coupled to the upper end of the blade (14a) of the cutting bar (14);
- a coupling shaft connecting the vertical shaft (20) of the eccentric (21) and the upper end of the shaft (16a) of the feeder (16);
- and a vertical shaft (26) for driving the motor roller (17) disposed at a spacing from the vertical coupling shaft (25) and connected thereto by a transmission (27, 28).

22. A leaf stripper according to one of claims 18 and 19 **characterised in that** the counteracting roller (18) or the pair of counteracting rollers (18') is subjected to the action of resilient thrust means (37) which hold it permanently in a pressed condition against the internal surface of the side wall (3) of the drum (2).

23. A leaf stripper according to any one of claims 1 to 22 wherein the leaf stripping head or each leaf stripping head (1) is suspended from a carrier chassis (35) arranged and fitted with means (36a) permitting it to be moved away from or moved towards the advance movement axis (Y-Y) of said leaf stripper, **characterised in that** the operating position of said leaf stripping head or each of said leaf stripping heads with respect to said axis (Y-Y) is regulated by a control system acting in dependence on the deformations to which the flexible side wall (3) of the drum (2) is subjected in the course of operation.

24. A leaf stripper according to claim 23 **characterised in that** the control system comprises means (33, 34) for detecting the deformations of the side wall (3) of the drum (2), said means being housed in the interior of said drum.

25. A leaf stripper according to claim 24 **characterised in that** the detection means comprise at least one sensor (33) housed in the interior of the rotating drum (2) in the proximity of the apertured flexible side wall (3) of said drum.

26. A leaf stripper according to claim 25 **characterised in that** the detection means comprise a plurality of sensors (33) positioned in the interior of the rotating drum (2) in vertical alignment at a mutual spacing.

27. A leaf stripper according to one of claims 25 and 26 **characterised in that** the sensor (33) or each sensor (33) is formed by a Hall effect sensor coupled to a feeler (42A, 42B, 42C, 42D,...), for example formed by a contact rod, preferably of a curved shape, in contact with the flexible wall (3) of the drum, said feeler supporting a magnet co-operating with the Hall effect sensor mounted fixedly to detect and measure the deformations of said flexible wall.

28. A leaf stripper according to any one of claims 21 to 27 **characterised in that** the control system comprises an electric jack (41) provided with an electronic board (43) for management of the control system by means of an algorithm making it possible to determine the successive deformations of the side wall (3) of the leaf stripping drum (2) in dependence on analysis and treatment of the signals emitted by the sensors (33), said control system acting on a deformable parallelogram (36a) from which the leaf stripping head (1) or each leaf stripping head (1) is suspended so as to obtain an optimum position for the leaf stripping drum relative to the vegetation in the course of operation.

## Patentansprüche

1. Entlaubungsmaschine, die insbesondere zum Entlauben des Weinstocks bestimmt ist und wenigstens einen Entlaubungskopf (1) umfasst, der mit einer sich drehenden Trommel ausgestattet ist, die eine zylindrische durchbrochene Seitenwand (3), Drehantriebsmittel (17 - 18) für diese Trommel, ein Ansaugmittel (4), das die Erzeugung eines Ansaugluftstroms gestattet, der die zylindrische durchbrochene Seitenwand (3) der Trommel durchquert, ein Mittel (5) zum Kanalisieren dieses Luftstroms durch einen wechselnden Abschnitt der Seitenwand und ein Schneidemittel (14) umfasst, das in der Nähe des Seitenwandabschnitts der sich drehenden Ansaugtrommel installiert und parallel oder im Wesentlichen parallel zur Drehachse (A-A) der Letzteren ausgerichtet ist, **dadurch gekennzeichnet, dass** die zylindrische durchbrochene Seitenwand (3) der Trommel (2) aus einem weichen und verformbaren Material ausgeführt, für einen Luftstrom durchlässig und an kreisförmigen oberen (10) und unteren (11) Endelementen befestigt ist, die aus einem halbstarren verformbaren Material ausgeführt sind.

2. Entlaubungsmaschine nach Anspruch 1, **dadurch gekennzeichnet, dass** die zylindrische durchbrochene Wand (3) der Trommel (2) aus einem Metallgewebe gebildet wird, das aus metallischen, ineinander verflochtenen Gliedern oder Ringen nach Art eines "Kettenhemds" gebildet wird.

3. Entlaubungsmaschine nach einem der Ansprüche 1 oder 2, **dadurch gekennzeichnet, dass** die Tangentialdrehgeschwindigkeit der Trommel (2) während der Arbeit wenigstens gleich der Vorschubgeschwindigkeit der Entlaubungsmaschine ist.

4. Entlaubungsmaschine nach Anspruch 3, **dadurch gekennzeichnet, dass** die Trommel (2) mittels ihres oberen kreisförmigen Endelements (10) drehbar aufgehängt ist.

5. Entlaubungsmaschine nach einem der Ansprüche 1 bis 4, **dadurch gekennzeichnet, dass** sie Spannmittel für die nachgiebige Wand (3) in der vertikalen Richtung umfasst.

6. Entlaubungsmaschine nach Anspruch 5, **dadurch gekennzeichnet, dass** die Spannmittel aus einer Feder (45) gebildet sind, die unter Druckbeanspruchung wirkt und um die untere Drehachse (7) der Trommel angeordnet ist, wobei diese Feder gegen den unteren Teil (8) der Letzteren abgestützt ist.

7. Entfaubungsmaschine nach einem der Ansprüche 1 bis 6, **dadurch gekennzeichnet, dass** ein Mittel (16) zum zusätzlichen Ziehen an den Blättern parallel zur Achse der Trommel (2) und während der Arbeit in Bezug auf den Pflanzenwuchs im Schneidbalken (14) vertieft angeordnet ist.

8. Entlaubungsmaschine nach Anspruch 7, **dadurch gekennzeichnet, dass** das Mittel zum zusätzlichen Ziehen an den Blättern aus einer sich drehenden Zuführeinrichtung (16) gebildet ist, die an eine Drehantriebsvorrichtung (M2) angekoppelt ist.

9. Entlaubungsmaschine nach einem der Ansprüche 7 oder 8, **dadurch gekennzeichnet, dass** das Mittel (16) zum zusätzlichen Ziehen an den Blättern in Kontakt mit der Seitenwand (3) der Trommel (2) oder sehr nahe an der Letzteren positioniert ist.

10. Entlaubungsmaschine nach einem der Ansprüche 8 oder 9, **dadurch gekennzeichnet, dass** die sich drehende Zuführeinrichtung (16) eine Achse (16a) umfasst, an der entlang vertikale nachgiebige Blätter (16b) befestigt sind.

11. Entlaubungsmaschine nach einem der Ansprüche 8 oder 9, **dadurch gekennzeichnet, dass** die sich drehende Zuführeinrichtung (16) aus einer Bürste gebildet ist.

12. Entlaubungsmaschine nach einem der Ansprüche 8 bis 11, **dadurch gekennzeichnet, dass** die Tangentialgeschwindigkeit der sich drehenden Zuführeinrichtung (16) wenigstens gleich der Tangentialgeschwindigkeit der Entlaubungstrommel (2) ist.

13. Entlaubungsmaschine nach einem der Ansprüche 1 oder 7, **dadurch gekennzeichnet, dass** ein Kamm (15) unter Berücksichtigung der Vorschubrichtung der Entlaubungsmaschine während der Arbeit parallel und vor dem Schneidbalken (14) angeordnet ist.

14. Entlaubungsmaschine nach einem der Ansprüche 1 bis 13, **dadurch gekennzeichnet, dass** die Schneideeinheit (14 - 15; 14 - 15 - 16) hinter einer diametralen Ebene (P-P) der sich drehenden Trommel (2) angeordnet ist, die während der Arbeit senkrecht zur Vorschubachse (X-X) des Entlaubungskopfs (1) ausgerichtet ist.

15. Entlaubungsmaschine nach einem der Ansprüche 1 bis 14, **dadurch gekennzeichnet, dass** die vertikalen Abschnitte (5c, 5d), die die Ansaugöffnung (9) für das Mittel zur Kanalisierung des Luftstroms (5) begrenzen, an der Innenfläche der Seitenwand (3) der Trommel (2) entlangstreichen, und **dadurch**, dass diese vertikalen Abschnitte (5c, 5d) aus einem undurchlässigen nachgiebigen Material ausgeführt sind.

16. Entlaubungsmaschine nach Anspruch 15, **dadurch gekennzeichnet, dass** das Mittel zur Kanalisierung des Luftstroms (5) aus einem undurchlässigen Gewebe gebildet wird, das an einem starren oder halbstarren Gestell befestigt ist.

17. Entlaubungsmaschine nach einem der Ansprüche 1 bis 16, **dadurch gekennzeichnet, dass** der vertikale Schneidbalken (14) eine Ausrichtung besitzt, gemäß der er einen Winkel in einer Größenordnung von +/- 45° und vorzugsweise einen Winkel in der Größenordnung von 20° mit einem über den aktiven Rand des Schneidbalkens verlaufenden Radius der sich drehenden Ansaugtrommel ausbildet.

18. Entlaubungsmaschine nach einem der Ansprüche 1 bis 17, **dadurch gekennzeichnet, dass** die Drehantriebsmittel der Trommel (2) eine vertikale Antriebsrolle (17), die an der Außenseite der Trommel (2) angeordnet ist, und wenigstens eine vertikale Gegenrolle (18) umfassen, die im Inneren der Trommel positioniert ist, wobei die zylindrische durchbrochene Wand (3) der Letzteren sich zwischen der Antriebsrolle (17) oder der Gegenrolle (18) eingeklemmt befindet.

19. Entlaubungsmaschine nach einem der Ansprüche 1 bis 17, **dadurch gekennzeichnet, dass** die Drehantriebsmittel der Trommel (2) eine vertikale Antriebsrolle (17), die an der Außenseite der Trommel (2) angeordnet ist, und ein Paar von Gegenrollen (18') mit parallelen Achsen umfassen, das im Inneren der Trommel positioniert und um eine vertikale Achse wie ein Drehgestell schwenkbar montiert ist, wobei die zylindrische durchbrochene Wand (3) der Trommel sich zwischen der Antriebsrolle (17) oder dem Paar von Gegenrollen (18') eingeklemmt befindet.

20. Entlaubungsmaschine nach einem der Ansprüche 18 oder 19, **dadurch gekennzeichnet, dass** sie eine gemeinsame Motorisierung (M2) umfasst, die Folgendes sicherstellt:
- den Drehantrieb der sich drehenden Trommel (2):
- die Betätigung des Schneidbalkens (14) und
- den Drehantrieb der Zuführeinrichtung (16).

21. Entlaubungsmaschine nach Anspruch 20, **dadurch gekennzeichnet, dass** die gemeinsame Motorisierung einen Hydraulikmotor (2) umfasst, der Folgendes antreibt:
- einen Exzenter, dessen Pleuelstange (22) an das obere Ende der Klinge (14a) des Schneidbalkens (14) gekoppelt ist;
- eine Kopplungswelle, die die vertikale Welle (20) des Exzenters (21) und das obere Ende der Achse (16a) der Zuführeinrichtung (16) miteinander verbindet;
- und eine vertikale Antriebswelle (26) der Antriebsrolle (17), die entfernt von der vertikalen Kopplungswelle (25) angeordnet und mit der Letzteren über ein Getriebe (27, 28, 29) verbunden ist.

22. Entlaubungsmaschine nach einem der Ansprüche 18 oder 19, **dadurch gekennzeichnet, dass** die Gegenrolle (18) bzw. das Paar von Gegenrollen (18') der Einwirkung der elastischen Schubmittel (37) unterworfen ist, die sie bzw. es permanent gegen die Innenfläche der Seitenwand (3) der Trommel (2) gedrückt halten.

23. Entlaubungsmaschine nach einem der Ansprüche 1 bis 22, bei welcher der Entlaubungskopf oder jeder Entlaubungskopf (1) an einem Traggestell (36) aufgehängt ist, das mit Mitteln (36a) angeordnet und ausgestattet ist, die es gestatten, ihn von der Vorschubachse (Y-Y) der Entlaubungsmaschine wegzuführen oder an diese anzunähern, **dadurch gekennzeichnet, dass** die Arbeitsposition des Entlaubungskopfs oder jedes der Entlaubungsköpfe in Bezug auf die Achse (Y-Y) durch ein Steuersystem reguliert wird, das in Abhängigkeit von den Verformungen agiert, denen die nachgiebige Seitenwand (3) der Trommel (2) während der Arbeit ausgesetzt ist.

24. Entlaubungsmaschine nach Anspruch 23, **dadurch gekennzeichnet, dass** das Steuersystem Erfassungsmittel (33, 34) für die Verformungen der Seitenwand (3) der Trommel (2) umfasst, die im Inneren der Trommel untergebracht sind.

25. Entlaubungsmaschine nach Anspruch 24, **dadurch gekennzeichnet, dass** die Erfassungsmittel wenigstens einen Sensor (33) umfassen, der im Inneren der sich drehenden Trommel (2) in der Nähe der nachgiebigen durchbrochenen Seitenwand (3) der Trommel untergebracht ist.

26. Entlaubungsmaschine nach Anspruch 25, **dadurch gekennzeichnet, dass** die Erfassungsmittel mehrere Sensoren (33) umfassen, die im Inneren der sich drehenden Trommel (2) in vertikaler Ausrichtung voneinander beabstandet positioniert sind.

27. Entlaubungsmaschine nach einem der Ansprüche 25 oder 26, **dadurch gekennzeichnet, dass** der Sensor (33) oder jeder Sensor (33) aus einem Halleffekt-Sensor gebildet ist, der an einen Taster (42A, 42B, 42C, 42D, ...) gekoppelt ist, der beispielsweise aus einem Kontaktstab mit vorzugsweise gekrümmter Form gebildet ist, der mit der nachgiebigen Wand (3) der Trommel in Kontakt steht, wobei der Taster einen Magneten trägt, der mit dem fest montierten Halleffekt-Sensor zusammenwirkt, um die Verformungen der nachgiebigen Wand zu erfassen und zu messen.

28. Entlaubungsmaschine nach einem der Ansprüche 21 bis 27, **dadurch gekennzeichnet, dass** das Steuersystem einen elektrischen Zylinder (41) umfasst, der mit einer Elektronikkarte (43) zur Ausführung der Steuerung mittels eines Algorithmus ausgestattet ist, der es ermöglicht, die aufeinander folgenden Verformungen der Seitenwand (3) der Entlaubungstrommel (2) in Abhängigkeit von der Analyse und der Verarbeitung der von den Sensoren (33) ausgesendeten Signale zu bestimmen, wobei das Steuersystem auf ein verformbares Parallelogramm (36a) einwirkt, an dem der Entlaubungskopf (1) oder jeder Entlaubungskopf (1) so aufgehängt ist, dass während der Arbeit eine optimale Position der Entlaubungstrommel in Bezug auf den Pflanzenwuchs erhalten wird.
